# EUROPÄISCHE PATENTSCHRIFT

(11) **EP 1 391 877 B1**
(45) Veröffentlichungstag und Bekanntmachung des Hinweises auf die Patenterteilung: **10.10.2007**
(21) Anmeldenummer: 02018721.7
(22) Anmeldetag: 21.08.2002
(51) Int. Cl.: G10L 15/18

(54) **Spracherkennungsverfahren**
Method for speech recognition
Procédé pour la reconnaisance de la parole

(43) Veröffentlichungstag der Anmeldung: 25.02.2004
(73) Patentinhaber: SIEMENS AKTIENGESELLSCHAFT, 80333 München (DE)
(72) Erfinder: Wandinger, Michael, 81829 München (DE)

(56) Entgegenhaltungen:
- EP-A- 0 177 854
- EP-A- 1 215 654
- MANOS A S ET AL: "A segment-based wordspotter using phonetic filler models" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21. April 1997 (1997-04-21), Seiten 899-902, XP010225940 ISBN: 0-8186-7919-0
- "APPROXIMATE WORD-SPOTTING METHOD FOR CONSTRAINED GRAMMARS" IBM TECHNICAL DISCLOSURE BULLETIN, IBM CORP. NEW YORK, US, Bd. 37, Nr. 10, 1. Oktober 1994 (1994-10-01), Seite 385 XP000475707 ISSN: 0018-8689

## Beschreibung

Die Erfindung betrifft ein Spracherkennungsverfahren, bei dem ein gesprochener Satz einem Spracherkenner zugeführt wird.

Es sind Spracherkennungsverfahren bekannt, die beispielsweise Strategien wie "Word-Spotting" oder "Language-Model" verwenden. Beim Word-Spotting werden aus einem gesprochenen Satz eines Anwenders für eine gewünschte Anwendung wichtige Informationen extrahiert und ein der Anwendung entsprechend zugeordneter Befehl ausgeführt.

Bei Language-Models hingegen wird von einer vorgegebenen Reihenfolge von festgelegten Befehlswörtern ausgegangen, wodurch eine definierte Befehlswortfolge gebildet wird. Das Language-Model kommt beispielsweise beim persönlichen digitalen Assistenten, PDA, zum Einsatz. Dabei werden die einzelnen Befehlswörter erkannt und abhängig von der Reihenfolge bzw. den Zusammenhängen der Befehlswörter eine Durchführung eines entsprechend zugeordneten Befehls beim PDA ausgelöst.

Beim Language-Model können beispielsweise sogenannte Bi-Gramm- bzw. Tri-Gramm-Modelle verwendet werden, die beim Erkennen einer Befehlswortfolge von einem erkannten Befehlswort ausgehend zusätzlich ein bzw. zwei zuletzt erkannte Befehlsworte entsprechend berücksichtigen.

Wird eine größere Anzahl an zuletzt erkannten Befehlsworten berücksichtigt, entstehen Grammatiken, die sehr komplex und damit sehr rechenintensiv sind. Spracherkennungsverfahren, die auf derartigen Grammatiken basieren, werden aufgrund ihrer Komplexität hauptsächlich auf Servern realisiert.

Bei einer Befehlswortfolge, die beispielsweise aus drei Befehlswörtern "Computer"-"Maier"-"Anrufen" besteht, muß als erstes Befehlswort stets "Computer" genannt und erkannt werden. Werden die weiteren Befehlsworte in der richtigen Reihenfolge erkannt, wird die Befehlswortfolge als Ganzes richtig interpretiert. Wird von einem Anwender hingegen eine Wortfolge "Computer"-"Bitte"-"Herrn"-"Maier"-"Anrufen" eingegeben, so versagt das Language-Model aufgrund der unbekannten Wörter "Bitte" und "Herrn", da diese nicht als Befehlswörter zulässig sind.
Ein Anwender wird eine Spracheingabe beim Language-Model aufgrund der strikten Regelungen eher als unnatürlich empfinden.

Beim Word-Spotting werden vorbekannte Schlüsselwörter als Befehlswörter aus einem Satz herausgefiltert und berücksichtigt, während unbekannte Wörter auf sogenannte "Füllwörter" abgebildet und verworfen werden. Für jedes einzelne Schlüssel- bzw. Befehlswortwort wird ein entsprechend zugeordneter Befehl ausgeführt.

Die Reihenfolge der einzelnen Befehlswörter ist beliebig, weshalb ein Anwender beim Word-Spotting die Spracheingabe aufgrund der fehlenden Regelungen eher als natürlich empfinden wird. Auf den Vorteil eines Language-Models, Zusammenhänge zwischen einzelnen Wörter zu berücksichtigen, wird aus Gründen einer einfachen und nicht aufwändigen Implementierung von Word-Spotting-Spracherkennungsverfahren bewusst verzichtet.

Aus EP 0177 854 A1 ist ein System zur Erkennung von Schlüsselworten bekannt, das zur Schlüsselwort-Erkennung verknüpfte und als "templates" bezeichnete Vorlagen verwendet. Dabei werden durch einen kombinierten Vergleich von so genannten "keyword templates" und "filler templates" mit einem Eingangssignal "input speech" zusammenhängende "templates" im Eingangssignal ermittelt.

Es ist Aufgabe der vorliegenden Erfindung, ein Spracherkennungsverfahren für eine natürliche Spracheingabe zu entwickeln, das gegenüber herkömmlichen Verfahren eine erhöhte Spracherkennungsleistung aufweist.

Die Aufgabe der Erfindung wird durch die Merkmale des Patentanspruchs 1 gelöst. Vorteilhafte Weiterbildungen sind in den Unteransprüchen angegeben.

Beim erfindungsgemäßen Spracherkennungsverfahren wird ein von einem Anwender gesprochener Satz einem Spracherkenner zugeführt. Abweichend von einem reinen Language-Model darf dieser Satz sowohl eine aus einer definierten Folge von einzelnen Befehlsworten bestehende Befehlswortfolge als auch eine zwischen den Befehlswörtern angeordnete Anzahl an Füllwörtern aufweisen.

Mit Hilfe des Spracherkenners werden im Satz einerseits Befehlswörter der Befehlswortfolge als auch Füllwörter anhand von vorteilhaft ausgenutzten Übergangswahrscheinlichkeiten gesucht und erkannt. Bei einer vollständig erkannten Befehlswortfolge wird ein entsprechend zugeordneter Befehl ausgeführt. Sowohl mögliche Befehlswörter als auch mögliche Füllwörter sind beim Spracherkenner vorbekannt.

Die Übergangswahrscheinlichkeiten werden für einen Übergang von Füllwort auf Füllwort, von Befehlswort auf Befehlswort und für Übergänge zwischen Befehlswort von Füllwort bestimmt. Die Übergangswahrscheinlichkeiten zwischen aufeinanderfolgenden Füllwörtern bzw. zwischen einem Füllwort und einem Befehlswort sind voneinander unabhängig, während die Übergangswahrscheinlichkeiten zwischen aufeinanderfolgenden Befehlswörtern aufgrund der definierten Reihenfolge der Befehlsworte voneinander abhängig sind. Tritt nach einem Befehlswort ein Füllwort auf, so bleibt erfindungsgemäß die Übergangswahrscheinlichkeit dieses Befehlswortes für ein nachfolgendes Befehlswort erhalten, die Übergangswahrscheinlichkeit wird sinngemäß über das Füllwort "weitergereicht". Dadurch sind beim erfindungsgemäßen Spracherkennungsverfahren beliebig viele Füllwörter zwischen zwei Befehlswörtern einfügbar, ohne dass Übergangswahrscheinlichkeit zwischen den einzelnen Befehlswörtern verloren gehen.

Durch die erfindungsgemäße Spracherkennungsverfahren werden die Vorteile des Language-Models mit den Vorteilen des Word-Spottings kombiniert und damit eine vom Anwender als natürlich empfundene Spracheingabe von Befehlen bzw. Befehlsfolgen ermöglicht.

Durch die erfindungsgemäße Einführung einer zeitlichen Abhängigkeit bei der Erkennung der einzelnen Befehlsworte als sogenannte "Timer-Funktionalität" wird die Erkennungsleistung verbessert.

Im Folgenden wird ein Ausführungsbeispiel der vorliegenden Erfindung anhand einer Zeichnung erläutert. Dabei zeigt:
- FIG 1: eine Darstellung des erfindungsgemäßen Spracherkennungsverfahrens in allgemeiner Form,
- FIG 2: eine weitere Darstellung des erfindungsgemäßen Spracherkennungsverfahrens unter Berücksichtigung von zugeordneten Übergangswahrscheinlichkeiten, und
- FIG 3: eine Darstellung von Übergangswahrscheinlichkeiten.

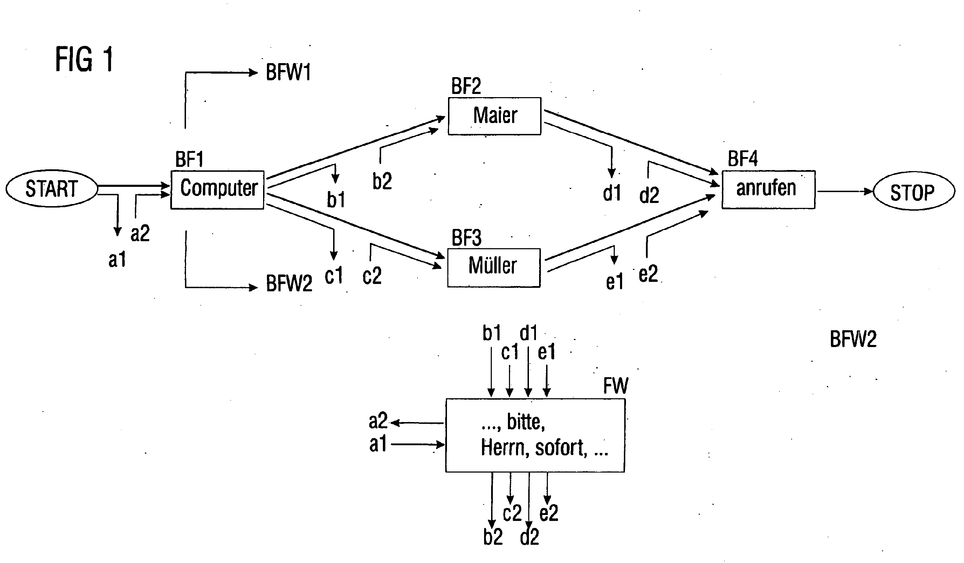

FIG 1 zeigt eine Darstellung des erfindungsgemäßen Spracherkennungsverfahrens in allgemeiner Form.

Es wird ein Satz "Computer bitte Herrn Maier sofort anrufen" eines Anwenders einem Spracherkenner zugeführt. Dieser Satz beinhaltet dabei eine erste Befehlswortfolge BFW1, die aus einem ersten Befehlswort BF1= "Computer", einem zweiten Befehlswort BF2= "Maier" und einem vierten Befehlswort BF4= "Anrufen", die in dieser Reihenfolge auftreten, besteht.

Der Spracherkenner ist derart ausgebildet, dass er die erste Befehlswortfolge BFW1 sowie eine zweite Befehlswortfolge BFW2 erkennt, die aus dem ersten Befehlswort BF1= "Computer", einem dritten Befehlswort BF3= "Müller" und dem vierten Befehlswort BF4= "Anrufen" besteht.

Mit Hilfe des Spracherkenners werden zwischen den Befehlswörtern BF1 bis BF4 angeordnete Wörter "bitte", "Herrn" und "sofort" des Satzes als Füllwörter FW erkannt, dargestellt durch jeweilige Abzweigungen b1, b2, d1, d2, c1, c2, el und e2.

Für die Übergangswahrscheinlichkeit vom Befehlswort BF2= "Maier" zum Befehlswort BF4= "Anrufen" spielt das Füllwort FW= "sofort" keine Rolle. Jedoch besteht eine große übergangswahrscheinlichkeit dafür, dass innerhalb des Satzes auf das zweite Befehlswort BF2= "Computer" das vierte Befehlswort BF4= "anrufen" folgt.

Entfällt ein Füllwort FW zwischen aufeinanderfolgenden Befehlswörtern BF1 bis BF4, so wird ein nachfolgendes Befehlswort BF1 bis BF4 sofort erkannt.

Bei einem Bi-Gramm-Modell wird bei den einzelnen Wortübergängen nur das zuletzt erkannte Wort berücksichtigt. Dabei können Befehlswortfolgen wie "Computer" - "Maier" - "anrufen" leicht nachgebildet werden. Mit dem zusätzlichem Wissen, dass das zweite Befehlswort BF2= "Maier" nur nach dem ersten Befehlswort BF1= "Computer" folgen darf, wird eine Verbesserung der Erkennungsleistung des Spracherkenners erreicht.

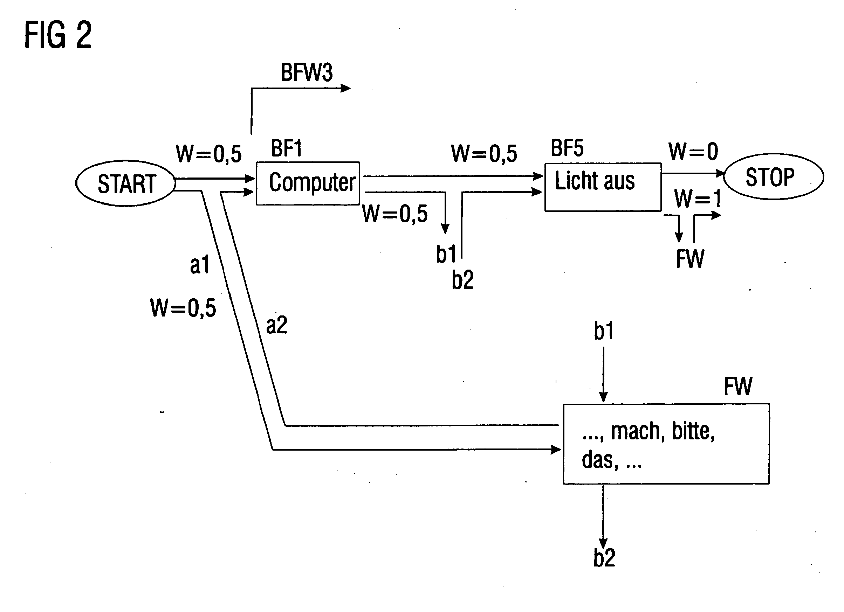

FIG 2 eine weitere Darstellung des erfindungsgemäßen Spracherkennungsverfahrens unter Berücksichtigung von zugeordneten Übergangswahrscheinlichkeiten.

Betrachtet wird hier folgender Anwendersatz:
"Computer" - "mach" - "bitte" - "das" - "Licht aus".

Nach einem START der Worteingabe besteht eine Übergangswahrscheinlichkeit W=0,5 dafür, dass am Satzanfang das erste Befehlswort BF1= "Computer" steht. Ebenso groß ist die Übergangswahrscheinlichkeit W=0,5 dafür, dass am Satzanfang ein einzelnes oder mehrere Füllwörter FW stehen, hier dargestellt durch eine entsprechende Abzweigung a1, a2 zu den Füllwörtern FW.

Die Übergangswahrscheinlichkeit dafür, dass nach dem ersten Befehlswort BF1= "Computer" sofort ein fünftes Befehlswort BF5= "Licht aus" folgt, beträgt wiederum W=0,5. Dann wäre eine dritte Befehlswortfolge BFW3 erkannt und das Spracherkennungsverfahren mit STOP beendet.

Mit W=0,5 besteht eine gleich große Ubergangswahrscheinlichkeit dafür, dass dem ersten Befehlswort BF1= "Computer" eines oder mehrere Füllwörter FW nachfolgen, hier dargestellt durch eine entsprechende Abzweigung b1, b2 zu den Füllwörtern FW.

Erfindungsgemäß werden die einzelnen übergangswahrscheinlichkeiten W über die Füllwörter FW weitergereicht. Das bedeutet, dass nach erkanntem ersten Befehlswort BF1= "Computer" die Übergangswahrscheinlichkeit W zum fünften Befehlswort BF5= "Licht aus" mit W=0,5 erhalten bleibt - unabhängig davon, wieviele Füllwörter FW dem ersten Befehlswort BF1= "Computer" nachfolgen.

Bei einer längeren Sprechpause des Anwenders bzw. ähnlichen Unterbrechungen könnte ein striktes Aufrechterhalten bzw. eine strikte Weitergabe der Übergangswahrscheinlichkeiten jedoch Systemprobleme verursachen, weshalb in einer vorteilhaften Weiterbildung der Erfindung eine Timer-Funktionalität eingeführt wird.

Dabei wird nach dem Erkennen eines Befehlswortes nach Ablauf einer vorgegebenen Zeit eine durch die Übergangswahrscheinlichkeiten bedingte Bindung zwischen aufeinanderfolgenden Befehlswörtern gelöscht oder es wird die entsprechende Übergangswahrscheinlichkeit entsprechend der Sprechpause kontinuierlich verringert.

Dadurch wird entweder der Bezug zum letzten erkannten Befehlswort zurückgesetzt oder es werden alle bereits ermittelten Übergangswahrscheinlichkeiten zwischen allen bisher erkannten Befehlswörtern zurückgesetzt, d.h. der Anwender müsste die Befehlswortfolge erneut eingeben.

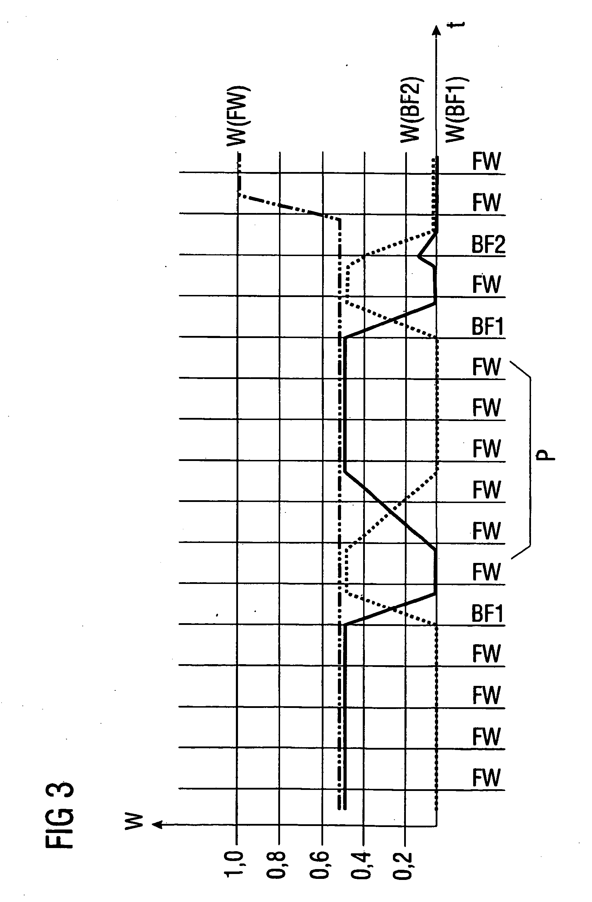

FIG 3 zeigt eine Darstellung von Übergangswahrscheinlichkeiten.

Im folgenden wird von einer an der x-Achse in zeitlicher Abhängigkeit angegebenen Satz mit Füllwörtern FW und mit einer aus den Befehlswörtern BF1 und BF5 (vergleichend mit FIG 2) bestehenden Befehlswortfolge BFW3 ausgegangen.

Wie in FIG 2 dargestellt, beträgt die Übergangswahrscheinlichkeit W eines Füllwortes FW stets W(FW)=0,5. Erst nach vollständigem Erkennen einer Befehlswortfolge steigt diese auf W(FW)=1 an, da nach Beendigung der Befehlswortfolge dritten BFW3 nur noch Füllwörter FW zu erwarten sind.

Für ein Auftreten des ersten Befehlswortes BF1 beträgt die Übergangswahrscheinlichkeit W(BF1)=0,5. Nach dessen Auftreten sinkt diese auf W(BF1)=0 ab. Erfolgt nun eine Eingabe mehrerer Füllwörter FW oder erfolgt eine Sprechpause, so beginnt durch die erfindungsgemäße Timer-Funktionalität die übergangswahrscheinlichkeit W(BF1) für das erneute Auftreten des ersten Befehlswortes BF1 wieder bis auf die Wahrscheinlichkeit W(BF1)=0,5 anzusteigen - hier dargestellt als Zeitdauer P. Bei erneutem Auftreten des ersten Befehlsworts BF1 fällt die Übergangswahrscheinlichkeit W(BF1) auf den Wert W(BF1)=0 ab.

Entsprechend ist das Verhalten der Übergangswahrscheinlichkeit W(BF2) des zweiten Befehlswortes BF2 dargestellt. Nach Auftreten des zweiten Befehlsworts BF2 sinken die Übergangswahrscheinlichkeiten W(BF1) und W(BF2) auf den Wert "0" ab, die dritte Befehlswortfolge BFW3 wurde vollständig erkannt.

Somit werden innerhalb der dritten Befehlswortfolge BFW3 Übergangswahrscheinlichkeiten W vorteilhaft zur Verbesserung der Spracherkennung verwendet. Jedoch bleibt die Abhängigkeit zwischen dem ersten Befehlswort BF1= "Computer" und dem fünften Befehlswort BF5= "Licht aus" auch bei Eingabe mehrerer Füllwörter FW bzw. bei längeren Sprechpausen nicht unbegrenzt erhalten.

## Patentansprüche

1. Spracherkennungsverfahren,
- bei dem ein gesprochener Satz eines Anwenders, der sowohl eine aus einer definierten Folge von einzelnen Befehlsworten bestehende Befehlswortfolge als auch eine zwischen den Befehlswörtern angeordnete Anzahl an Füllwörtern aufweist, einem Spracherkenner zugeführt wird,
- bei dem mit Hilfe des Spracherkenners aufeinanderfolgende Befehlswörter anhand von zugeordneten Übergangswahrscheinlichkeiten gesucht und erkannt werden,
- bei dem mit Hilfe des Spracherkenners Füllwörter erkannt werden, und
- bei dem bei einer vollständig erkannten Befehlswortfolge ein entsprechend zugeordneter Befehl ausgeführt wird.
**dadurch gekennzeichnet**
**dass** jedem Übergang von einem Befehlswort zum nächstfolgenden Befehlswort eine Übergangswahrscheinlichkeit zugeordnet wird und nach erkennen eines i-ten Befehlsworts ein darauffolgendes Befehlswort mit Hilfe der zugeordneten Übergangswahrscheinlichkeit erkannt wird, wobei die dem i-ten Befehlswort zugeordnete Übergangswahrscheinlichkeit über nachfolgende Füllwörter erhalten bleibt.

2. Spracherkennungsverfahren nach Anspruch 1, **dadurch gekennzeichnet, dass** nach erkennen eines i-ten Befehlsworts nach Ablauf einer vorgegebenen Zeit wieder ein erstes Befehlswort der Befehlswortfolge gesucht wird.

3. Spracherkennungsverfahren nach Anspruch 1, **dadurch gekennzeichnet, dass** nach erkennen eines i-ten Befehlsworts nach Ablauf einer vorgegebenen Zeit das i-1 te Befehlswort der Befehlswortfolge gesucht wird.

4. Spracherkennungsverfahren nach einem der vorhergehenden Ansprüche, bei dem beim Spracherkenner Übergangswahrscheinlichkeiten hinterlegt werden.

## Claims

1. Method for speech recognition
- with which a spoken sentence of a user, which comprises a command word sequence made up of a defined sequence of individual command words as well as a number of filler words arranged between the command words, is fed to a speech recogniser,
- with which with the aid of the speech recogniser, consecutive command words are sought and recognised on the basis of assigned transition probabilities,
- with which filler words are recognised with the aid of the speech recogniser and
- with which a correspondingly assigned command is executed in the case of a completely recognised command word sequence
**characterised in that**
a transition probability is assigned to each transition from a command word to the next command word and after recognising an ith command word, a subsequent command word is recognised with the aid of the assigned transition probability, with the transition probability assigned to the ith command word being maintained over subsequent filler words.

2. Method for speech recognition according to claim 1, **characterised in that** after recognising an ith command word after a predetermined time has elapsed, a first command word of the command word sequence is sought again.

3. Speech recognition method according to claim 1, **characterised in that** after recognising an ith command word after a predetermined time has elapsed, the i-1th command word of the command word sequence is sought.

4. Speech recognition method according to one of the preceding claims, with which transition probabilities are stored in speech recognisers.

## Revendications

1. Procédé de reconnaissance de la parole,
- dans lequel une phrase prononcée par un utilisateur comprenant non seulement une suite de mots d'instruction formée d'une suite définie de mots d'instruction individuels, mais également un nombre de mots de remplissage situés entre les mots d'instruction, est amenée à un reconnaisseur de parole,
- dans lequel des mots d'instruction consécutifs sont cherchés et reconnus à l'aide du reconnaisseur de parole sur base de probabilités de transition associées,
- dans lequel des mots de remplissage sont reconnus à l'aide du reconnaisseur de parole,
- dans lequel une instruction correspondante associée est exécutée lorsqu'une suite de mots d'instruction est entièrement reconnue,
**caractérisé en ce qu'**une probabilité de transition est associée à chaque transition d'un mot d'instruction au mot d'instruction suivant le plus proche et, après la reconnaissance d'un i^{ème} mot d'instruction, un mot d'instruction subséquent est reconnu à l'aide de la probabilité de transition associée, la probabilité de transition associée au i^{ème} mot d'instruction étant conservée au-delà des mots de remplissage qui suivent.

2. Procédé de reconnaissance de la parole selon la revendication 1, **caractérisé en ce que**, après la reconnaissance d'un i^{ème} mot d'instruction, un premier mot d'instruction de la suite de mots d'instruction est à nouveau cherché après écoulement d'un temps prédéfini.

3. Procédé de reconnaissance de la parole selon la revendication 1, **caractérisé en ce que**, après la reconnaissance d'un i^{ème} mot d'instruction, le i-1^{ème} mot d'instruction de la suite de mots d'instruction est cherché après écoulement d'un temps prédéfini.

4. Procédé de reconnaissance de la parole selon l'une des revendications précédentes, dans lequel des probabilités de transition sont enregistrées au niveau du reconnaisseur de parole.
